# FASCICULE DE BREVET EUROPEEN

(11) **EP 3 935 341 B1**
(45) Date de publication et mention de la délivrance du brevet: **01.05.2024**
(21) Numéro de dépôt: 20709526.6
(22) Date de dépôt: 02.03.2020
(51) Int. Cl.: G01B 9/0209, G01B 9/02015, G01B 11/00, G01B 11/06, G01B 11/14, G01B 11/27, G01M 11/02, G02B 27/62, G02B 21/00

(54) **PROCEDE ET DISPOSITIF DE MESURE D'INTERFACES D'UN ELEMENT OPTIQUE**
VERFAHREN UND VORRICHTUNG ZUM MESSEN VON GRENZFLÄCHEN EINES OPTISCHEN ELEMENTS
METHOD AND DEVICE FOR MEASURING INTERFACES OF AN OPTICAL ELEMENT

(30) Priorité: 05.03.2019 FR 1902234
(43) Date de publication de la demande: 12.01.2022
(73) Titulaire: Fogale Nanotech, 30900 Nîmes (FR)
(72) Inventeur: FRESQUET, Gilles, 30190 Garrigues Sainte Eulalie (FR); PETITGRAND, Sylvain, 30132 Caissargues (FR)
(74) Mandataire: IPAZ
(86) Numéro de dépôt international: PCT/EP2020/055429
(87) Numéro de publication internationale: WO 2020/178234

(56) Documents cités:
- FR-A1- 2 959 305
- FR-A1- 3 014 212
- US-A1- 2011 075 887

## Description

### Domaine technique

La présente invention concerne un procédé de mesure d'interfaces d'un élément optique faisant partie d'une pluralité d'éléments optiques sensiblement identiques. Elle concerne également un dispositif de mesure mettant en oeuvre un tel procédé.

Le domaine de l'invention est celui des mesures optiques d'éléments optiques.

### Etat de la technique

Lors de la fabrication d'éléments optiques, tels que des lentilles ou des objectifs comportant plusieurs lentilles, il peut être nécessaire de contrôler ou mesurer des épaisseurs ou des positions d'éléments constitutifs, ou encore des espaces entre éléments constitutifs, le long d'un axe de mesure tel que l'axe optique de l'élément optique.

Pour cela, il est notamment connu d'utiliser des techniques d'interférométrie à faible cohérence. Un faisceau optique de mesure issu d'une source optique à spectre large est propagé au travers des surfaces de l'élément optique. Les réflexions du faisceau sur ces surfaces sont collectées et analysées en les faisant interférer entre elles et/ou avec un faisceau de référence pour déterminer les différences de trajets optiques entre faisceaux interférents, et de là en déduire les positions et/ou distances entre surfaces ou interfaces correspondantes. On peut ainsi, par exemple, déterminer des épaisseurs de lentilles, des distances entre lentilles et/ou des positions de lentilles dans un assemblage optique.

De telles techniques de mesure fonctionnent en général en rétro-réflexion. Il est alors nécessaire que le faisceau optique de mesure soit incident sur toutes les surfaces à mesurer selon une incidence normale ou perpendiculaire, de sorte à générer une onde réfléchie qui puisse être captée par le système de mesure. Pour la mesure d'un assemblage optique, cette condition implique en général de devoir superposer ou aligner le faisceau de mesure avec l'axe optique de l'assemblage, et en particulier des lentilles qui le composent. Il est donc nécessaire de mettre en oeuvre une procédure d'alignement du faisceau optique de mesure efficace. Dans la pratique, il faut pouvoir positionner le faisceau de mesure relativement à l'axe optique d'un assemblage avec une précision, par exemple, de l'ordre du micron pour des objets de plusieurs millimètres de dimensions. Il est alors nécessaire de disposer de méthodes permettant d'obtenir ces performances.

Un système pour mesurer des positions de lentilles dans un assemblage optique avec un interféromètre à faible cohérence est décrit dans US 8,760,666 B2. L'alignement du faisceau de mesure est réalisé en propageant un faisceau optique d'alignement au travers des éléments optiques de l'assemblage, et en détectant sa déviation par rapport à une position théorique avec un capteur sensible à la position, de type CCD ou PSD. Comme la position théorique n'est pas connue en pratique, et qu'en outre le faisceau d'alignement est dégradé par les lentilles qu'il traverse, cette déviation est détectée en effectuant une rotation de l'assemblage optique, de sorte à en déduire une trajectoire parcourue par ce faisceau d'alignement sur le détecteur. La position de l'assemblage et son orientation angulaire sont corrigées de sorte à minimiser l'extension de cette trajectoire.

Cependant, dans un contexte de production de masse d'assemblages optiques, par exemple pour fabriquer des objectifs de smartphones, les temps de mesure doivent être minimisés. En particulier, l'utilisation de techniques d'alignement optique basées sur une rotation angulaire des échantillons comme décrit précédemment n'est pas adaptée.

### Exposé de l'invention

Un but de la présente invention est de pallier ces inconvénients.

Un autre but de l'invention est de proposer un procédé et un dispositif de mesure d'interfaces, tels que des mesures de positions ou d'espacements entre des surfaces, d'un objet tel qu'un élément ou un assemblage optique, qui permettent un positionnement rapide et précis du faisceau de mesure par rapport à l'axe optique de l'objet.

Il est aussi un but de l'invention de proposer un procédé et un dispositif de mesure d'interfaces ou de surfaces adaptés à des mesures sur des assemblages de lentilles, en particulier de dimensions de l'ordre de quelques centaines de micromètres à quelques millimètres, ou de microlentilles.

Il est aussi un but de l'invention de proposer un procédé et un dispositif de mesure d'interfaces adaptés à des mesures sur des lentilles asphériques, ou de type formes libres (« *freeform »* en Anglais), avec des rayons de courbures millimétriques.

Il est encore un but de l'invention de proposer un procédé et un dispositif de mesure d'interfaces adaptés à des mesures à haute cadence sur une pluralité d'objets ou d'éléments optiques similaires.

Au moins un de ces buts est atteint avec un procédé de mesure d'interfaces d'un élément optique à mesurer, faisant partie d'une pluralité d'éléments optiques similaires comprenant au moins un élément optique dit « de référence », le procédé étant mis en oeuvre par un dispositif de mesure comprenant :
- une voie d'imagerie configurée pour produire un faisceau d'éclairage, et comprenant des moyens d'imagerie configurées pour acquérir des images d'un élément optique éclairé par ledit faisceau d'éclairage dans un champ de vue des moyens d'imagerie ; et
- une voie de mesure configurée pour produire un faisceau de mesure à une position déterminée relativement audit champ de vue, et comprenant un capteur optique de distance configuré pour produire des mesures de distance et/ou d'épaisseurs ;
ledit procédé comprenant les étapes suivantes :
- positionnement relatif de l'au moins un élément optique de référence et du faisceau de mesure, de sorte à permettre une mesure d'interfaces dudit élément optique de référence ;
- acquisition d'une image, dite « de référence », de l'au moins un élément optique de référence ainsi positionné ;
- positionnement de l'élément optique à mesurer relativement au champ de vue de sorte à permettre l'acquisition d'une image, dite « de mesure », dudit élément optique à mesurer ;
- détermination d'une différence de position dans le champ de vue de l'élément optique à mesurer relativement à l'au moins un élément optique de référence à partir des images de référence et de mesure ;
- ajustement de la position de l'élément optique à mesurer dans le champ de vue de sorte à annuler ladite différence de position ; et
- mesure des interfaces de l'élément optique à mesurer au moyen du faisceau de mesure.

Un « élément optique » peut désigner tout type d'objet optique, destiné par exemple à être inséré dans un faisceau optique, à mettre en forme un faisceau optique, et/ou à réaliser une image. Il peut désigner par exemple :
- un composant optique unique tel qu'une lentille ou une lame ;
- un assemblage de lentilles et/ou d'autres composants optiques, tel qu'un objectif d'imagerie, de caméra, ou un dispositif de mise en forme d'un faisceau optique,
- un guide d'onde optique, une fibre optique, etc.

Un élément optique peut notamment être constitué de, ou comprendre, des éléments réfractifs ou diffractifs tels que des lentilles. Il peut alors comprendre un axe optique correspondant à l'axe de propagation d'un faisceau qui le traverse. Cet axe optique peut être également, en particulier pour des éléments optiques avec des lentilles réfractives, l'axe ou le seul axe perpendiculaire à toutes les surfaces ou les interfaces de l'élément optique.

Par « pluralité d'éléments optiques similaires », on entend un ensemble d'éléments optiques de même type, du même modèle, d'un même lot, ou ayant suivi les mêmes étapes de fabrication, notamment dans la production de masse.

Le procédé selon la présente invention permet d'effectuer des mesures des interfaces d'un élément optique, pour en déduire par exemple des mesures de distance ou de position de ces interfaces, et/ou des mesures d'épaisseurs des composants optiques ou des espaces les séparant. Ces interfaces peuvent par exemple comprendre des surfaces de lentilles.

Ces mesures peuvent être réalisées avec un faisceau de mesure d'un capteur de distance fonctionnant en rétro-réflexion. Pour cela, il est nécessaire que le faisceau de mesure soit incident de manière perpendiculaire sur les interfaces à mesurer (dans les limites d'une tolérance angulaire dépendant des optiques utilisées). En général, cette condition requiert que le faisceau de mesure soit aligné de manière optimale ou au moins suffisante avec l'axe optique de l'élément optique à mesurer. En pratique ce positionnement est une opération délicate et coûteuse en temps.

Selon l'invention, ce positionnement est déterminé pour un ou quelques éléments optiques, dits de référence, d'une pluralité d'éléments optiques similaires, par exemple provenant d'un même lot, d'une même série de production, ou ayant suivi les mêmes étapes de fabrication. Le point de mesure ainsi déterminé correspond à un point de référence dans le champ de vue des moyens d'imagerie.

Le procédé selon l'invention utilise le fait que des éléments optiques ayant été fabriqués selon des étapes de fabrication identiques ou similaires exhibent des motifs ou caractéristiques spécifiques similaires de contraste d'intensité lumineuse réfléchie et/ou transmise lorsqu'ils sont illuminés de façon similaire. Il est ainsi possible d'exploiter des images, produites par un faisceau d'éclairage réfléchi, transmis et/ou diffusé par les éléments optiques et contenant de tels motifs ou caractéristiques spécifiques, afin de déterminer les déplacements ou décalages relatifs de ces éléments optiques dans le champ de vue des moyens d'imagerie.

Il est à noter que, dans la mesure où les éléments optiques comprennent ou sont constitués de composants transparents, les images obtenues ne sont en général pas des images de ces éléments ou de leurs surfaces, mais des signatures optiques résultant de l'interaction de l'éclairage avec ces composants.

Les informations de déplacement ainsi obtenues peuvent ensuite être utilisées pour positionner de manière beaucoup plus rapide et efficace les éléments optiques par rapport au point de référence dans le champ de vue. Le faisceau de mesure, positionné au point de référence ou de mesure, est alors automatiquement aligné avec l'axe optique de l'élément optique à mesurer. La position du faisceau de mesure correspond à une position optimale dans laquelle des mesures les plus précises possible des interfaces de l'élément optiques peuvent être obtenues. Grâce au positionnement du faisceau de mesure en référence à un motif ou une forme caractéristique, il est possible de localiser, sans équivoque, pour tous les éléments optiques similaires la meilleure position du faisceau de mesure, permettant ainsi d'obtenir des mesures fiables, répétables et reproductibles. La connaissance de positionnement du faisceau de mesure par rapport à une forme caractéristique est ainsi utilisée pour positionner de façon automatisée les éléments optiques à mesurer par rapport à un ou des éléments optiques de référence et d'en déduire directement et sans effort supplémentaire la position du faisceau de mesure pour des mesures d'éléments optiques subséquents, après localisation d'au moins un de ces motifs caractéristiques.

La détermination du point de mesure sur le ou les éléments optiques de référence, et donc l'étape de positionnement relatif du ou des éléments optiques de référence et du faisceau de mesure, peut être réalisée par des méthodes connues. Cette étape n'a pas à être répétée pour les autres éléments optiques à mesurer.

Le procédé selon l'invention peut être mis en oeuvre, notamment, pour le contrôle d'éléments optiques ou d'assemblages optiques lors de leur production, par exemple des objectifs formés de lentilles ou de microlentilles tels que des objectifs de smartphone ou pour l'industrie automobile, et notamment dans la production de masse. En effet, dans ce cas, il est très important de minimiser les temps de mesure afin de pouvoir maintenir des cadences de production élevées. Le procédé selon l'invention permet de déterminer le plus rapidement possible et de façon la plus fiable possible l'axe optique moyen de l'élément optique ou de l'assemblage à mesurer, correspondant à un alignement optimisé du faisceau de mesure, sans qu'il soit nécessaire de balayer l'élément avec le faisceau de mesure jusqu'à obtenir des signaux de mesures satisfaisants, et sans qu'il soit nécessaire d'effectuer cette optimisation pour chaque élément optique d'un lot d'une même fabrication à grand volume. Notamment, le positionnement du faisceau de mesure peut être réalisé rapidement en utilisant l'information sur la mesure d'un seul élément optique de ce lot.

L'étape de positionnement relatif de l'élément optique de référence et du faisceau de mesure peut comprendre un alignement dudit faisceau de mesure de sorte à être perpendiculaire à au moins une partie des interfaces de l'au moins un élément optique de référence.

Selon un mode de réalisation nullement limitatif, le procédé selon l'invention peut comprendre l'acquisition d'une pluralité d'images de référence en utilisant une pluralité d'éléments optiques de référence de la pluralité d'éléments optiques.

Dans ce cas, une image de référence peut être générée à partir d'une combinaison d'une pluralité d'images de référence. Cette combinaison peut être effectuée par exemple en moyennant les intensités des différentes images de référence.

Selon un exemple de réalisation nullement limitatif du procédé selon l'invention, l'étape de détermination d'une différence de positions peut comprendre une étape de comparaison des images de référence et de mesure.

Pendant cette étape de comparaison, des similitudes de formes et notamment de formes de contraste d'intensité lumineuse des images peuvent être exploitées pour déterminer la position relative d'un élément optique par rapport au champ de vue.

L'étape de comparaison peut ainsi comprendre les étapes suivantes :
- identification et localisation d'au moins une forme caractéristique correspondante, dans les images de référence et de mesure respectivement ;
- détermination d'une différence de position ou d'un déplacement relatif entre lesdites formes caractéristiques correspondantes dans les images de référence et de mesure.

Alternativement ou en plus, l'étape de comparaison peut comprendre une étape de corrélation d'images.

La technique de corrélation d'images est en effet particulièrement bien adaptée pour mesurer les différences de position ou des déplacements relatifs entre deux images. Il s'agit d'une technique pour mesurer le champ de déplacement d'une partie ou de la totalité d'une image par rapport à une autre image ou une image de référence.

De manière générale, l'étape de détermination d'une différence de position entre images peut être réalisée en mettant en oeuvre toute méthode connue de recalage d'image.

La différence de position ou le déplacement relatif peut être exprimé sous la forme d'une transformation géométrique, par exemple rigide, avec des translations et des rotations.

Selon un mode de réalisation nullement limitatif, l'étape d'ajustement de la position peut comprendre :
- un déplacement de l'élément optique à mesurer relativement au champ de vue ; et/ou
- un déplacement du faisceau de mesure relativement au champ de vue.

L'ajustement de la position est effectué de sorte à compenser la différence de position identifiée à l'étape précédente. Il est effectué au moins en translation, ce qui peut être suffisant pour positionner le faisceau de mesure. Optionnellement il peut être effectué également en rotation pour plus de précision.

Le procédé selon l'invention peut comprendre en outre une optimisation du positionnement du faisceau de mesure relativement à l'élément optique à mesurer.

Cette optimisation peut être effectuée en déplaçant localement le faisceau de mesure relativement à l'élément, de sorte à optimiser un paramètre de mesure, tel qu'une intensité détectée ou une différence avec des mesures attendues. Le déplacement local peut être effectué, par exemple, selon une grille de points ou une trajectoire, ou de sorte à minimiser des gradients d'erreurs.

Cette optimisation ressemble bien entendu à ce qui est mis en oeuvre pour le positionnement relatif d'un élément optique de référence et du faisceau de mesure. Toutefois elle demeure beaucoup plus rapide, car l'étape la plus consommatrice de temps pour positionner le faisceau de mesure, qui est de le positionner de sorte à permettre une mesure des interfaces même non-optimale, est réalisée rapidement grâce à l'ajustement de la position du faisceau de mesure par comparaison des images de référence et de mesure.

Selon un exemple de réalisation nullement limitatif, les étapes du procédé relatives à l'élément optique à mesurer peuvent être réalisées pour une pluralité d'éléments optiques à mesurer issus d'un même ensemble de production.

Le procédé selon l'invention est mis en oeuvre pour mesurer les positions et/ou l'espacement des interfaces d'un élément optique sous la forme d'un assemblage optique avec des lentilles, tel qu'un objectif de smartphone, les interfaces comprenant les surfaces des lentilles.

Suivant un autre aspect de l'invention, il est proposé un dispositif de mesure d'interfaces d'un élément optique à mesurer, faisant partie d'une pluralité d'éléments optiques similaires comprenant au moins un élément optique de référence, le dispositif comprenant :
- une voie d'imagerie configurée pour produire un faisceau d'éclairage, et comprenant des moyens d'imagerie configurés pour acquérir des images d'un élément optique éclairé par ledit faisceau d'éclairage dans un champ de vue des moyens d'imagerie ;
- une voie de mesure configurée pour produire un faisceau de mesure à une position déterminée relativement audit champ de vue, et comprenant un capteur optique de distance configuré pour produire des mesures de distance et/ou d'épaisseurs ; chaque voie comprenant une source de lumière distincte ;
- des moyens de déplacement configurés pour déplacer l'élément optique à mesurer ou le faisceau de mesure relativement au champ de vue ; et
- un module de traitement configuré pour traiter les mesures de distance et/ou d'épaisseur, et les images ;
agencés pour mettre en oeuvre toutes les étapes du procédé selon l'invention.

Le dispositif, mettant en oeuvre le procédé selon l'invention, représente un système mesurant, ce que signifie que lorsque le faisceau de mesure est correctement aligné, par exemple avec l'axe optique de l'élément optique à mesurer, un signal de mesure exploitable est obtenu, permettant d'identifier des interfaces, leurs positions et espacements.

Le dispositif permet ainsi, par exemple, d'effectuer un contrôle en production d'éléments optiques, de sorte à vérifier s'ils sont conformes à des spécifications. Il est à noter par ailleurs que s'il n'y a pas de signal de mesure exploitable après l'ajustement de la position, cela peut signifier que le faisceau de mesure n'a pas pu être aligné avec l'axe optique de l'élément optique à mesurer (par exemple), ou que cet élément n'a pas d'axe optique commun à tous ses composants, indiquant que cet élément optique est défectueux et doit être rejeté. Ce cas de figure peut se produire par exemple si un composant optique n'est pas aligné, décentré ou incliné.

Selon un exemple de réalisation nullement limitatif, le capteur optique peut comprendre un interféromètre à faible cohérence.

Un tel interféromètre est particulièrement bien adapté pour effectuer des mesures de distance et/ou d'espacement.

Tout type d'interféromètre à faible cohérence connu et adapté peut être utilisé. Un tel interféromètre peut notamment mettre en oeuvre :
- une technique d'interférométrie à faible cohérence dans le domaine temporel, avec une ligne à retard pour générer des retards optiques entre ondes interférentes ;
- une technique d'interférométrie à faible cohérence dans le domaine spectral, avec un spectromètre pour l'analyse des signaux d'interférences ; ou
- une technique d'interférométrie à faible cohérence par balayage en longueur d'onde, avec une source laser accordable.

Le dispositif selon l'invention peut en outre comprendre des éléments optiques pour insérer le faisceau de mesure dans la voie d'imagerie, de sorte qu'il se propage dans le champ de vue.

Ces éléments optiques peuvent comprendre, par exemple, des lames ou des cubes séparateurs.

Selon un mode de réalisation particulier nullement limitatif du dispositif, la voie de mesure peut en outre être configurée pour produire un deuxième faisceau de mesure incident sur une face opposée de l'élément optique à mesurer.

Dans ce cas, l'élément optique à mesurer peut être mesuré selon ses deux faces.

Le dispositif selon l'invention comprend en outre un support pour recevoir la pluralité d'éléments optiques.

Ce support peut consister, par exemple, en un support d'échantillons destiné à recevoir une pluralité d'éléments optiques à mesurer dans des réceptacles ou ouvertures, ces réceptacles ou ouvertures pouvant être alignés, par exemple, selon un quadrillage.

De préférence, les éléments optiques à mesurer sont alignés sur le support de sorte à avoir leurs axes optiques respectifs parallèles à l'axe optique des moyens d'imagerie et le faisceau de mesure. En effet, pour des éléments optiques avec des tolérances précises, tels que des barillets de lentilles, ce parallélisme peut être réalisé de manière suffisamment précise par des tolérancements et un ajustage mécanique.

Dans ce cas, le dispositif selon l'invention peut comprendre des moyens de déplacements adaptés pour déplacer le support dans un plan perpendiculaire à un axe optique des moyens d'imagerie.

Ces moyens de déplacement peuvent par exemple comprendre des tables de translation et/ou de rotation.

L'alignement des éléments optiques à mesurer est réalisé alors uniquement dans le plan perpendiculaire à l'axe optique des moyens d'imagerie, ce qui peut être facilement obtenu à cadence élevée.

### Description des figures et modes de réalisation

D'autres avantages et caractéristiques apparaîtront à l'examen de la description détaillée d'exemples nullement limitatifs, et des dessins annexés sur lesquels :
- La Figure 1 est une représentation schématique d'un exemple de réalisation non limitatif d'un dispositif de mesure mis en oeuvre dans la présente invention ;
- La Figure 2 est une représentation schématique d'un exemple de capteur optique pouvant être utilisé dans le dispositif de mesure de la présente invention ;
- La Figure 3 représente schématiquement des exemples d'objets ou d'éléments optiques à mesurer pouvant être utilisés dans la présente invention ;
- La Figure 4 est une représentation schématique d'un exemple de réalisation non limitatif d'un procédé de mesure selon la présente invention ;
- La Figure 5 est un exemple de mesure d'un objet de référence obtenue avec la présente invention ;
- La Figure 6a est un exemple d'image d'un objet obtenue avec la présente invention ;
- La Figure 6b est un exemple d'image traitée d'un objet obtenue avec la présente invention ;
- La Figure 7a est un exemple d'image traitée d'un objet de référence obtenue avec la présente invention ;
- La Figure 7b est un exemple d'image traitée d'un objet à mesurer obtenue avec la présente invention
- La Figure 8 illustre un exemple non limitatif de mise en oeuvre d'étapes du procédé selon la présente invention ; et
- La Figure 9 est un exemple de mesure d'un objet à mesurer obtenue avec la présente invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

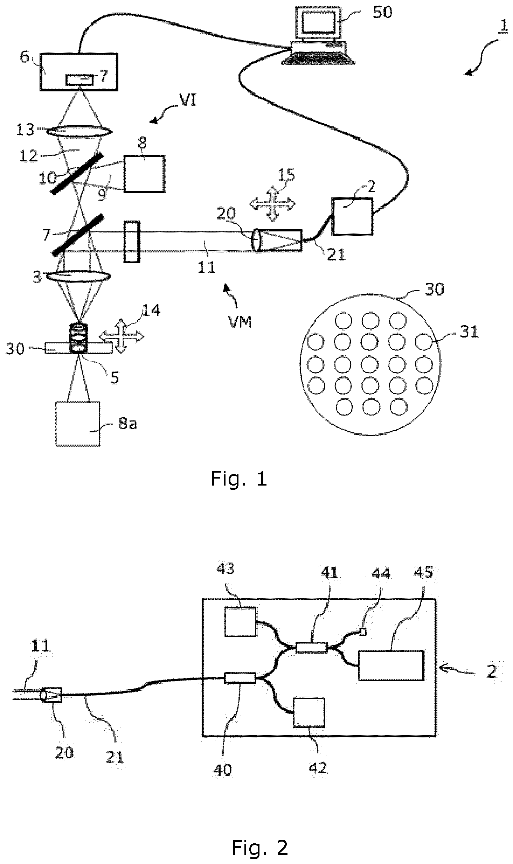

La Figure 1 est une représentation schématique d'un exemple de réalisation non limitatif d'un dispositif de mesure pouvant être mis en oeuvre dans la cadre de la présente invention. Le dispositif peut notamment être utilisé pour mettre en oeuvre le procédé de l'invention.

Le dispositif 1, représenté sur la Figure 1, est agencé pour effectuer des mesures de positions d'interface, ou d'épaisseurs, le long d'un axe optique, sur un objet 5 de type élément optique 5, tel qu'un assemblage optique avec une pluralité de lentilles.

Le dispositif 1 de mesure comprend une voie d'imagerie VI et une voie de mesure VM. Dans la voie de mesure VM, un faisceau de mesure 11 issu d'un capteur optique de distance 2 est amené, par exemple par une fibre optique monomode 21, à un collimateur 20. Le collimateur 20 forme un faisceau sensiblement collimaté qui est dirigé vers un objet à mesurer 5 par une lame séparatrice 7, de préférence dichroïque, ou un cube séparateur. Le faisceau de mesure 11 est focalisé sur l'objet par un objectif distal 3.

Le collimateur 20 et l'objectif distal 3 constituent un système d'imagerie qui image le coeur de la fibre 21 dont est issu le faisceau de mesure 11 dans ou à proximité de l'objet 5.

Lorsque le faisceau de mesure 11 est incident sur une surface ou une interface de l'objet 5 à mesurer selon une direction sensiblement perpendiculaire cette surface ou cette interface, dans des limites de tolérance dépendant notamment de l'ouverture angulaire au niveau de l'objectif distal 3, les réflexions qui se produisent sur cette surface ou cette interface sont recouplées dans la fibre optique 21 et traitées dans le capteur optique 2.

Le capteur optique de distance 2 peut comprendre un interféromètre à faible cohérence.

La Figure 2 illustre un exemple d'interféromètre à faible cohérence dans le domaine temporel, utilisable dans le cadre de la présente invention.

L'interféromètre 2 à faible cohérence peut fonctionner, par exemple, dans l'infrarouge. Pour mesurer des assemblages optiques avec des traitements antireflets, il peut être avantageux de choisir pour l'interféromètre une longueur d'onde de travail différente de celles pour lesquels les traitements antireflets sont optimisés, auquel cas ils peuvent présenter une réflectivité élevée. Ainsi, un interféromètre fonctionnant dans l'infrarouge convient bien pour faire des mesures d'assemblages optiques destinés à être utilisés dans des longueurs d'ondes visibles.

Par ailleurs, dans la configuration illustrée sur la Figure 1, l'interféromètre 2 est destiné à fonctionner au travers des moyens d'imagerie, et notamment de l'objectif distal 3, qui sont optimisés pour des longueurs d'ondes visibles, standards en microscopie. Or on sait que les traitements antireflets des optiques optimisés pour des longueurs d'ondes visibles tendent à augmenter au contraire sensiblement la réflectivité des surfaces dans l'infrarouge, parfois jusqu'à 30%, ce qui constitue des conditions de mesure très sévères pour l'interférométrie infrarouge. Le procédé mis en oeuvre dans l'interféromètre 2 permet précisément de le rendre pratiquement insensible aux réflexions parasites.

Ce résultat est atteint en mettant en oeuvre un principe d'interférométrie à faible cohérence dans lequel seules les réflexions du faisceau de mesure 11 ayant eu lieu dans une zone ou étendue de mesure englobant les interfaces de l'objet 5 (ou du moins à une distance optique équivalente à la distance optique entre le collimateur 20 et l'objet 5 le long du faisceau 1) peuvent provoquer des interférences exploitables.

L'interféromètre 2, tel qu'illustré sur la Figure 2, comprend un double interféromètre de Michelson à base de fibres optiques monomodes. Il est illuminé par une source de lumière fibrée 42. La source de lumière 42 peut être une diode superluminescente (en Anglais : Super Luminescente Diode, SLD) dont la longueur d'onde centrale peut être de l'ordre de 1300 nm à 1350 nm. Le choix de cette longueur d'onde correspond notamment à des critères de disponibilité des composants.

La lumière issue de la source 42 est dirigée au travers d'un coupleur 40 et de la fibre 21 vers le collimateur 20, pour constituer le faisceau de mesure 11. Une partie du faisceau est réfléchie dans la fibre 21 au niveau du collimateur 20, par exemple à l'interface silice-air ou verre-air constituant l'extrémité de la fibre optique, pour constituer l'onde de référence.

Les rétroréflexions issues de l'objet 5 sont couplées dans la fibre 21 et dirigées avec l'onde de référence vers un interféromètre de décodage construit autour d'un coupleur à fibres 41. Cet interféromètre de décodage a une fonction de corrélateur optique dont les deux bras sont, respectivement, une référence fixe 44 et une ligne à retard temporelle 45. Les signaux réfléchis au niveau de la référence 44 et de la ligne à retard 45 sont combinés, au travers du coupleur 41, sur un détecteur 43. La fonction de la ligne à retard 45 est d'introduire un retard optique entre les ondes incidentes et réfléchies, variable au cours du temps d'une manière connue, obtenu par exemple par le déplacement d'un miroir.

La longueur des bras 44 et 45 de l'interféromètre de décodage est ajustée de telle sorte à permettre de reproduire avec la ligne à retard 45 les différences de trajets optiques entre l'onde de référence réfléchie au niveau du collimateur 20 et les rétroréflexions issues de l'objet 5, auquel cas on obtient au niveau du détecteur 43 un pic d'interférence dont la forme et largeur dépendent des caractéristiques spectrales de la source 42.

Ainsi, l'étendue de mesure est déterminée par la différence de longueur optique entre les bras 44 et 45 de l'interféromètre de décodage 2, et par la course maximale de la ligne à retard 45. En outre, comme l'onde de référence est générée au niveau du collimateur 20 à l'extérieur du système d'imagerie, les réflexions parasites dans la voie de mesure VM ne contribuent pas de manière significative aux interférences.

En référence à la Figure 1, la voie d'imagerie VI du dispositif 1 selon le mode de réalisation représenté comprend une caméra 6, équipée d'un capteur matriciel CCD 7, ainsi que des moyens optiques d'imagerie aptes à former une image de l'objet 5, ou au moins de sa face d'entrée, sur le capteur 7 de la caméra 6, selon un champ de vue sur l'objet 5, le champ de vue étant sensiblement proportionnel au grandissement des moyens optiques d'imagerie et à la dimension du capteur 7.

Dans l'exemple de mise en oeuvre de la Figure 1, les moyens optiques d'imagerie comprennent un objectif distal 3 disposé du côté de l'objet 5 et un relais optique 13.

La voie d'imagerie VI du dispositif 1 comprend également une source de lumière 8 dont le spectre d'émission comprend des longueurs d'ondes visibles et/ou dans le proche infrarouge (autour de 1 µm). Cette source de lumière 8 émet un faisceau d'éclairage 9 qui illumine l'objet 5 de telle sorte à en permettre une imagerie par réflexion. Pour des raisons de clarté, le faisceau d'éclairage 9 n'est pas présenté sur la Figure 1 après la lame 10 qui permet de diriger la lumière de la source de lumière 8 vers l'objet 5 et la lumière réfléchie vers la caméra 6.

Le dispositif 1 peut également comprendre, en plus ou en remplacement de la source de lumière 8, une source de lumière 8a pour éclairer l'objet 5 en transmission.

La voie de mesure VM interférométrique comprenant le faisceau de mesure 11 est agencée de sorte à traverser au moins en partie les moyens optiques d'imagerie et notamment l'objectif distal 3. Le faisceau de mesure 11 est inséré dans les moyens optiques d'imagerie par des moyens de couplage 7 de telle sorte qu'il soit incident sur l'objet 5 selon une zone de mesure comprise dans le champ de vue de la voie d'imagerie.

Dans une autre configuration, non illustrée, le faisceau de mesure peut être inséré dans le champ de vue des moyens d'imagerie par une lame séparatrice positionnée entre l'objectif 3 et l'objet 5.

Le montage de la Figure 1 permet donc d'insérer un faisceau de mesure 11 interférométrique dans le champ de vue d'un système d'imagerie, consistant en la caméra 6, l'objectif distal 3 et le relais 13 dans l'exemple représenté. Grâce à cette configuration, la position du faisceau de mesure 11 peut être connue ou indexée, ou au moins fixe, par rapport aux images produites par le système d'imagerie.

Le collimateur 20 peut comprendre en outre optionnellement des moyens de déplacement 15 qui permettent de déplacer de manière connue la position du faisceau de mesure 11, et donc la position du point de mesure, sur l'objet 5 relativement au champ de vue couvert par les moyens d'imagerie.

Dans le dispositif 1 tel que représenté sur la Figure 1, le faisceau de mesure 11 interférométrique est maintenu fixe, à la même position, dans la voie d'imagerie VI. Ainsi, la position du faisceau de mesure 11 est également maintenue fixe dans le référentiel de la caméra. Elle peut être en outre ajustée et/ou déterminée précisément lors d'une étape préliminaire d'alignement du dispositif.

Dans une configuration différente de celle représentée sur la Figure 1, le dispositif peut comprendre des moyens pour amener un deuxième faisceau de mesure sur l'objet 5 à inspecter selon un côté opposé par rapport à l'objet à celui des éléments de la voie d'imagerie. Dans cette configuration, il est également possible d'indexer ou au moins de maintenir fixe la position du deuxième faisceau de mesure par rapport aux images produites par les moyens d'imagerie.

Dans ce cas, le dispositif peut également comprendre le faisceau de mesure 11, ce qui permet une mesure de l'objet 5 selon ses deux faces.

Le deuxième faisceau de mesure peut être issu du capteur 2, ou d'un autre capteur mettant en oeuvre un principe de mesure identique ou différent.

Le dispositif 1 selon le mode de réalisation représenté sur la Figure 1 comprend en outre un support d'échantillon 30 destiné à recevoir les objets à mesurer 5, ainsi que des moyens de déplacement 14, tels que des tables de translation et/ou de rotation, permettant de déplacer le support 30 dans un plan perpendiculaire à l'axe optique des moyens d'imagerie.

Selon un exemple également montré sur la Figure 1, en particulier pour le contrôle d'objets 5 sous la forme d'éléments optiques 5 de type objectifs de caméra produits en volume, le support d'échantillon 30 comprend une pluralité de réceptacles 31 permettant de recevoir une pluralité d'objets 5 à mesurer.

A titre d'exemple, ces objets 5 peuvent être des lentilles assemblées dans un barillet, et les réceptacles sont des ouvertures débouchantes d'un diamètre correspondant à celui des barillets, avec un épaulement à la base sur lequel vient reposer le barillet.

De préférence, le support d'échantillon 30 est agencé de sorte que les objets 5 à mesurer sont positionnés avec leurs axes optiques respectifs parallèles à l'axe optique du système d'imagerie et surtout parallèles à l'axe optique du faisceau de mesure 11. Ainsi, l'alignement du faisceau de mesure 11 sur l'axe optique des objets 5 peut être réalisé avec les moyens de déplacement dans le plan 14 uniquement, et donc à cadence élevée.

Le dispositif 1 selon l'invention comprend en outre un module de traitement 50, ou module de calcul, configuré pour traiter les mesures de distance et/ou d'épaisseur, et les images. Ce module de calcul comprend au moins un ordinateur, une unité centrale ou de calcul, un microprocesseur (de préférence dédié), et/ou des moyens logiciels adaptés.

Le dispositif 1 selon le mode de réalisation représenté sur la Figure 1 peut être utilisé pour mettre en oeuvre les étapes du procédé selon l'invention qui seront décrites ci-dessous.

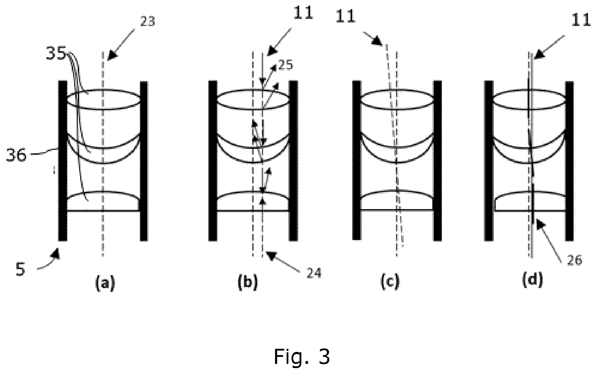

La Figure 3 illustre des exemples d'objets ou d'éléments optiques à mesurer 5. Il s'agit d'objectifs constitués chacun de plusieurs lentilles ou microlentilles 35 montées dans un barillet 36 et empilées suivant un axe optique 23 commun.

La Figure 3 (a) représente le cas idéal, dans lequel les lentilles 35 sont parfaitement alignées et chacun des axes optiques des lentilles 35 est superposé avec l'axe optique commun 23 de l'objectif ainsi formé.

La Figure 3 (b) et la Figure 3 (c) représentent le même objet 5 décrit par la Figure 3 (a). Une position du faisceau de mesure 11 de l'interféromètre suivant un axe de mesure est indiquée. Dans les deux cas présentés, l'axe optique 23 de l'objet 5 et l'axe de mesure représenté par le faisceau de mesure 11 sont différents, la position du faisceau de mesure 11 n'étant pas optimale. La Figure 3b et la Figure 3c illustrent les deux types d'erreurs d'alignement du faisceau de mesure 11 avec l'axe optique 23 à prendre en compte, à savoir, respectivement, une erreur de centrage et une erreur d'alignement angulaire du faisceau de mesure 11. Dans les deux cas, cela provoque des mesures non optimisées, ou même impossibles.

Comme représenté sur la Figure 3 (b), des réflexions 25 du faisceau de mesure 11 sont générées à chaque interface de l'objet 5. A cause de l'erreur d'alignement de l'axe optique 23 de l'objet 5 par rapport au faisceau de mesure 11, la direction de propagation des réflexions 25 aux interfaces n'est plus alignée avec la direction 24 du faisceau de mesure 11. Cela entraine une perte d'intensité du signal rétroréfléchi lors du couplage avec la fibre optique 21 de la voie de mesure du dispositif 1. Des interfaces peuvent alors ne pas être détectées ou être mesurées avec des erreurs importantes.

Dans les exemples présentés sur les Figures 3 (a) à (c), les éléments optiques (lentilles 35) sont parfaitement alignés et disposés les uns par rapport aux autres. Des erreurs de positions individuelles des lentilles 35 créées durant l'assemblage se traduiraient par les mêmes problèmes de détection des réflexions des interfaces. Dans cette situation, un axe optique de symétrie unique n'existe pas.

La Figure 3 (d) illustre un ensemble de lentilles 35 ayant chacune un axe optique 26 légèrement différent d'un axe de symétrie commun 23. La mesure n'est alors optimisée que lorsque le faisceau de mesure 11 est aligné sur un axe correspondant à une erreur de position minimale (en décentrement et/ou en angle) pour chaque lentille 35 par rapport aux axes optiques 26 respectifs de ces lentilles 35.

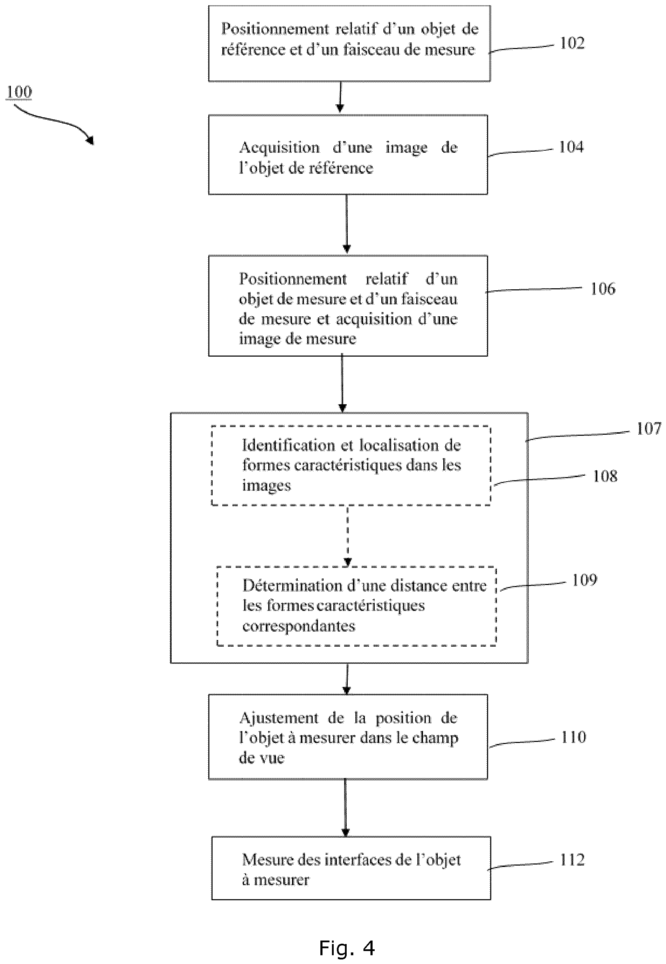

La Figure 4 est une représentation schématique d'un exemple de réalisation non limitatif d'un procédé de mesure selon l'invention.

Le procédé 100, représenté sur la Figure 4, comprend une étape 102 de positionnement relatif d'un objet de référence et d'un faisceau de mesure d'un capteur optique de distance, de sorte à permettre une mesure des interfaces de l'objet de référence. Le faisceau de mesure peut être issue, par exemple, d'un interféromètre à faible cohérence, tel qu'écrit en référence au dispositif 1 de la Figure 1. L'objet de référence et l'objet à mesurer font chacun partie d'une pluralité d'objets similaires.

L'étape 102 permet de déterminer un point de mesure représentatif de l'axe optique de l'objet de référence, et donc d'aligner le faisceau de mesure avec l'axe optique de l'objet de référence. Le faisceau de mesure est positionné à une position de mesure optimisée des interfaces de l'objet de référence.

Cette position de mesure optimisée, ou de référence, correspond à l'alignement le plus proche du faisceau de mesure par rapport à l'axe optique moyen de l'objet de référence. Dans cette configuration, une mesure la plus précise possible des positions des surfaces des éléments formant l'objet peut être obtenue.

Selon un exemple, lors de l'étape 102 de positionnement, le faisceau de mesure est aligné de sorte à être perpendiculaire à au moins une partie des interfaces de l'objet de référence.

L'étape 102 de la détermination d'une position de mesure optimisée pour l'objet de référence peut être réalisée selon plusieurs approches.

Il est par exemple possible d'effectuer un balayage systématique de l'objet de référence par le faisceau de mesure, selon une trajectoire prédéterminée (par exemple en grille ou en spirale), de sorte à déterminer la position optimale suivant un critère tel que des amplitudes de signaux de mesure et/ou une correspondance des mesures avec des valeurs attendues. Bien entendu, la caméra peut être utilisés pour effectuer un pré-positionnement et limiter la zone de balayage.

Lorsque cette étape 102 de positionnement est mise en oeuvre avec un dispositif 1 comprenant un support d'échantillon 30 comme décrit précédemment, le faisceau de mesure 11 peut être considéré comme parallèle aux axes optiques respectifs des objets ou des éléments optiques 5. Pour déterminer la position de mesure, on effectue alors simplement des déplacements dans le plan du support d'échantillon 30 avec ses moyens de déplacement 14, tels que des tables de translation et/ou de rotation.

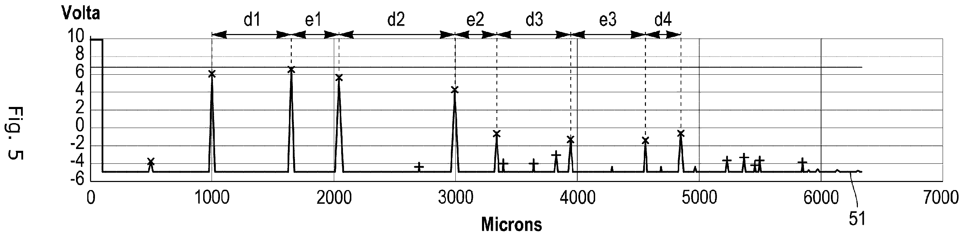

La Figure 5 illustre un exemple de mesure interférométrique obtenue avec un interféromètre à faible cohérence 2 tel qu'illustré à la Figure 2, pour un élément optique 5 de type objectif de caméra formé par un empilement de quatre microlentilles suivant un même axe optique. Ces microlentilles possèdent des épaisseurs respectives d1, d2, d3 et d4 et sont séparées par des espacements e1, e2 et e3. Les valeurs de positions des surfaces des microlentilles attendues, ou des distances entre interfaces, peuvent être connues par conception ou déduites par des mesures préliminaires. La courbe continue 51 illustre un signal de mesure 51 avec des pics correspondants à des enveloppes d'interférogrammes, et représentatifs de réflexions du faisceau de mesure sur des interfaces des lentilles de l'élément optique 5. Ces pics peuvent correspondre à des interfaces réelles, ou être dus à des réflexions multiples dans le système (interfaces virtuelles). Pour identifier les interfaces réelles, en particulier pour des échantillons complexes, on peut utiliser les connaissances a priori sur l'élément optique 5, telles que les valeurs de position de surfaces attendues. Dans l'exemple de la Figure 5, les positions respectives des surfaces des microlentilles attendues, telles qu'identifiées sur le signal de mesure 51, sont indiquées par des croix. L'identification des interfaces attendues sur le signal de mesure et la comparaison des valeurs de position et/ou de distances mesurées avec des valeurs attendues permet de valider la mesure et la position du faisceau de mesure relativement à l'axe optique de l'objectif de référence. En effet, si le faisceau de mesure est mal positionné par rapport à l'axe optique, il n'y a en général pas de pics détectés sur le signal de mesure 51, ou seulement une partie, et avec des valeurs de position ou de distances potentiellement erronées. Par ailleurs, en particulier pour un élément optique 5 de mesure, l'absence de certains pics ou des valeurs de position ou de distances hors d'une marge de tolérance par rapport aux valeurs attendues indique un élément optique défaillant, avec par exemple des lentilles mal positionnées.

Dans l'exemple illustré, la Figure 5 présente un résultat expérimental de mesure validée sur des interfaces d'un objectif de caméra de référence, les pics de la courbe continue 51 ayant des positions correspondant aux positions attendues des surfaces des microlentilles. Ce résultat est donc représentatif de l'alignement du faisceau de mesure avec l'axe optique de l'objectif de caméra de référence.

Lors d'une étape 104 du procédé 100, une image, dite « de référence », de l'objet ou de l'élément optique de référence, tel positionné lors de l'étape précédente 102, est acquise. Cette acquisition est réalisée grâce à la voie d'imagerie VI, ou système d'imagerie, du dispositif 1 selon l'invention.

Comme décrit précédemment et en référence à la Figure 1, l'objet 5 est illuminé par un faisceau d'éclairage 9. Dans l'exemple illustré, ce faisceau est réfléchi en partie par l'objet suivant un faisceau d'imagerie 12 qui est imagé sur le photodétecteur 7 de la caméra 6.

Les images de réflexion peuvent être produites par la lumière réfléchie par les premières surfaces de l'objet ou de l'élément 5, par exemple la surface du premier composant optique et/ou des éléments du barillet.

Les images peuvent aussi être la résultante de multiples réflexions provenant des différents composants optiques de l'objet illuminé par le faisceau d'éclairage 9.

Des images présentant des formes de contraste d'intensité lumineuse caractéristiques à l'objet inspecté et aux conditions d'imagerie sont ainsi générées.

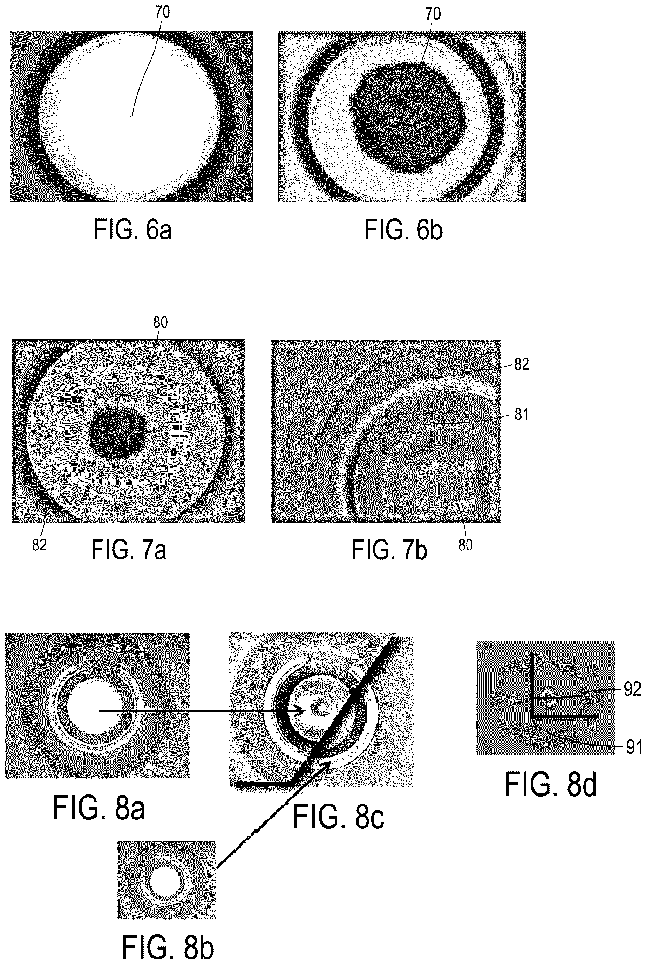

Un exemple d'image, après acquisition et traitement sur un ordinateur 50, des réflexions multiples réfléchie par les microlentilles d'un objectif de caméra sous illumination est montré sur la Figure 6a. Dans cet exemple, les contrastes d'intensité lumineuse présentent des formes caractéristiques d'anneaux sensiblement concentriques.

Il est à noter qu'avec un objet 5 de type élément ou assemblage optique, on n'obtient pas à proprement parler une image de l'objet puisque les surfaces des éléments de l'assemblage sont réfléchissantes et/ou transparentes. L'image obtenue correspond plutôt à une signature visuelle due aux contributions de parties du faisceau d'éclairage 9 réfléchies et diffusées, par exemple, entre les lentilles et sur les parois de l'assemblage. Il s'agit plutôt d'une image de réflexions parasites dans l'élément optique. En particulier, cette image ne permet pas dans le cas général de visualiser l'axe optique de l'assemblage.

De ce point de vue, il peut être avantageux d'utiliser une source de lumière 8 en réflexion dont le spectre comprend d'autres longueurs d'ondes que celles pour lesquelles l'élément optique 5 a été optimisé, en particulier au niveau des traitements antireflets, de sorte à générer plus de réflexions parasites.

La position 70 du faisceau de mesure est également repérée sur la Figure 6a. Il est à noter toutefois qu'il n'est pas nécessaire de connaître précisément cette position, dès lors qu'elle demeure fixe dans le champ de vue de la caméra 6.

L'image de l'objet de référence collectée est enregistrée dans des moyens de stockage de données du dispositif 1, par exemple dans l'ordinateur 50.

Lors d'une étape 106 du procédé, un objet à mesurer est positionné relativement au champ de vue de la caméra 6 afin de permettre l'acquisition d'une image, dite « de mesure », de l'objet.

Comme décrit en référence à la Figure 1, une pluralité d'objets 5 d'un lot de fabrication peuvent être placés sur un support 30 agencé de sorte que les objets 5 à mesurer soient positionnés avec leurs axes optiques respectifs parallèles à l'axe optique du système d'imagerie du dispositif 1, et parallèles à l'axe optique du faisceau de mesure 11.

Les moyens de déplacement 14 permettent de déplacer les objets 5 par rapport au champ de vue des moyens d'imagerie et par rapport au faisceau de mesure 11 qui est fixé dans ce champ de vue. Les moyens de déplacement 14 permettent ainsi de changer d'objet à mesurer 5 sans avoir à modifier les moyens d'éclairage ni le système de détection et la position du faisceau de mesure 11. Toutefois, du fait des incertitudes de positionnement des objets 5 sur le support 30, ces moyens de déplacement ne permettent pas, en général ou du moins de manière fiable, de positionner directement le faisceau de mesure 11 à la bonne position sur un objet 5.

Dans la mesure où les objets 5 de référence et à mesurer sont identiques ou similaires, les images de mesures respectives des objets 5 obtenues avec le même dispositif de mesure 1 sont similaires dans le sens où des motifs de contraste ou textures présents dans les images sont semblables. Les images de mesure sont donc également similaires à l'image de référence préalablement enregistrée.

Une fois une image de mesure acquise pour un objet, celle-ci est comparée à l'image de référence lors d'une étape 107 du procédé. Cette étape 107 de comparaison permet d'exploiter des similitudes de formes ou de contraste pour déterminer une différence de positions dans le champ de vue de l'objet à mesurer relativement à l'objet de référence.

Lors de l'étape 107, les images de mesure et de référence sont analysées pour en déduire une information de différence de position l'objet à mesurer par rapport à l'objet de référence dans le champ de vue du système d'imagerie. L'information de différence de position permet de déduire la position relative de l'objet à mesurer par rapport au faisceau de mesure 11 dont la position est maintenue fixe dans le champ de vue.

Selon un exemple de mise en oeuvre de l'étape 107, des formes ou des contours semblables sont recherchés dans les images de mesure et de référence, ces contours et formes pouvant apparaitre à différentes positions.

Plus précisément, lors d'une étape 108, chaque image est analysée pour identifier et localiser une ou plusieurs formes caractéristiques. L'identification des formes caractéristiques dans les images acquises peut être réalisée avec toutes techniques de traitement d'images connues, par exemple par reconnaissance de formes, et/ou corrélation d'images.

Les formes caractéristiques peuvent comprendre, par exemple, une image, ou une portion d'image en niveau de gris ou en couleur, ou une image de contours obtenue par une technique d'extraction de contours et/ou de segmentation. Les formes peuvent être issues de mesures de calibration et/ou d'une modélisation théorique ou géométrique. Elles peuvent prendre la forme d'une image ou d'une structure unique, globale, ou d'un ensemble d'images ou de structures distinctes avec des relations spatiales connues.

Les formes caractéristiques peuvent être prédéterminées dans certains cas.

Les différences de position des formes caractéristiques correspondent aux positions respectives de l'objet à mesure et de l'objet de référence dans le champ de vue.

Lors d'une étape 109, les distances entre les contours ou formes caractéristiques de deux images respectives peuvent ensuite être calculées pour fournir les différences, dans le même champ de vue, de positions entre les deux images.

La Figure 6b représente un exemple de traitement de l'image de la Figure 6a. le traitement appliqué est un filtrage de type gradient, qui fait ressortir les variations de niveaux de gris de l'image de la Figure 6a. On fait ainsi apparaître des formes caractéristiques plus faciles à localiser sur des images de diffusion ou de réflexions parasites dans des éléments optiques transparents.

Les Figures 7a et 7b illustrent des exemples d'images traitée d'un objet de référence et d'un objet à mesurer, respectivement. Le traitement fait apparaitre des formes caractéristiques 82. Un curseur 80 indique la position du faisceau de mesure dans le champ de vue de la caméra. Dans la Figure 7a, correspondant à une image de référence, cette position du faisceau de mesure est alignée avec l'axe optique de l'objet de référence.

Dans la Figure 7b, l'objet à mesurer apparaît dans une position différente dans le champ de vue du système d'imagerie par rapport à la position de l'objet de référence de la Figure 7a. Un second curseur 81 indique la position de l'axe optique de cet objet à mesurer, sur laquelle il faut placer le faisceau de mesure, et qui est inconnue. La différence de position des curseurs 80, 81 correspond donc au décalage de l'objet à mesurer par rapport à l'objet de référence dans le champ de vue et, par conséquent, par rapport au faisceau de mesure du capteur de distance optique. Selon l'invention, ce décalage est déterminé par une technique de recalage d'images, dont l'objectif est de superposer au mieux, dans le champ de vue, les deux images et/ou leurs formes caractéristiques 82 de sorte à en déterminer la différence de position.

Selon un exemple préférentiel de mise en oeuvre de l'étape 107 du procédé de l'invention, une méthode de corrélation d'images est utilisée pour déterminer la différence de positions de l'objet à mesurer relativement à l'objet de référence dans le champ de vue. Il est supposé que toute différence entre l'image de référence et l'image déformée ou déplacée de l'objet à mesurer provient du seul effet du champ de déplacement de la forme caractéristique observée.

La Figure 8 représente un exemple de mise en oeuvre de l'étape 107 du procédé basé sur l'utilisation de la corrélation d'images.

Les Figures 8 (a) et 8 (b) montrent respectivement une image de référence enregistrée d'un objet de référence et une image de mesure d'un objet mesuré. La Figure 8 (c) illustre une superposition des images des Figures 8 (a) et (b), utilisée pour le calcul de corrélation, pour une position (x, y) relative particulière. Une pluralité de superpositions d'images pour différentes positions (x, y) relatives sont utilisées pour effectuer ce calcul.

La Figure 8 (d) représente un graphe de corrélation des images des Figures 8 (a) et (b) en fonction de la pluralité de positions (x, y) relatives de ces images. La position d'origine 91 correspond à la position de l'image de référence. Le maximum du graphe correspond à la position 92 de maximum corrélation pour l'image de mesure. La comparaison des deux positions 91, 92 permet d'obtenir les valeurs de recalage entre les deux images dans le même champ de vue et donc, en même temps, l'ajustement de positions à effectuer entre les objets de mesure et de référence.

Il est à noter que dans l'exemple illustré, ces valeurs de recalage ou d'ajustement sont déterminées en translation uniquement. En effet, dans la mesure où les objets ou éléments optiques considérés présentent pour l'essentiel une symétrie de rotation par rapport à leur axe optique, la différence de position en rotation entre l'objet de référence et l'objet de mesure peut être négligée.

Lorsque la différence de positions dans le champ de vue de l'objet à mesurer relativement à l'objet de référence a été déterminée, l'étape 110 suivante du procédé selon l'invention, représenté sur la Figure 4, consiste en un ajustement de la position de l'objet à mesurer dans le champ de vue par rapport à la position de l'objet de référence, de sorte à annuler la différence de positions.

En effet, comme montré précédemment, la différence de positions dans le champ de vue du système d'imagerie entre les images de l'objet de référence et de l'objet mesuré permet de déduire directement la différence de positions des objets dans ce même champ de vue.

Cette connaissance permet de déplacer l'objet à mesurer dans le champ de vue pour le placer sur une position correspondant à la position de l'objet de référence. Lors de cette étape 110, l'axe optique de l'objet à mesurer est ainsi automatiquement aligné avec le faisceau de mesure 11 du capteur de distance optique 2. Ceci est dû au fait que le point de mesure déterminé dans l'étape 102 du procédé et représentatif de l'axe optique de l'objet de référence est retrouvé sur l'objet à mesurer.

Dans le mode de réalisation présenté, l'étape 110 d'ajustement de la position est effectuée soit en déplaçant l'objet à mesurer relativement au champ de vue à l'aide des moyens de déplacement 14.

Bien entendu, cet ajustement de la position pourrait être réalisé également en déplaçant le faisceau de mesure relativement au champ de vue à l'aide des moyens de déplacement 15.

A l'issu de cet étape 110 de recalage, l'objet à mesurer est donc correctement positionné dans le champ de vue, de sorte que le faisceau de mesure soit aligné avec l'axe optique de l'objet à mesurer.

Lors d'une étape 112 de mesure, des interfaces de l'objet à mesurer sont mesurées au moyen du faisceau de mesure 11.

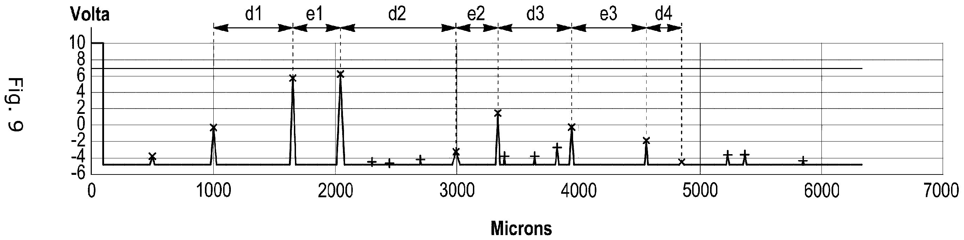

La Figure 9 présente un exemple d'un résultat de mesure d'interférométrie à faible cohérence pour un objectif de caméra provenant du même lot de fabrication que l'objectif de référence, dont les résultats de mesure sont présentés sur la Figure 5, décrite ci-dessus en relation avec l'étape 104 de la détermination du point de mesure représentatif de l'axe optique.

Sur la Figure 9, une intensité mesurée est tracée en fonction d'une distance parcourue par le faisceau de mesure. Les pics d'intensité correspondant aux positions attendues, signalées par des croix, des surfaces des microlentilles sont détectés correctement.

Bien sûr, l'invention n'est pas limitée aux exemples qui viennent d'être décrits et de nombreux aménagements peuvent être apportés à ces exemples sans sortir du cadre de l'invention.

## Revendications

1. Procédé (100) de mesure d'interfaces d'un élément optique à mesurer (5), faisant partie d'une pluralité d'éléments optiques similaires comprenant au moins un élément optique dit « de référence », le procédé (100) étant mis en oeuvre par un dispositif de mesure (1) comprenant :
- une voie d'imagerie (VI) configurée pour produire un faisceau d'éclairage (9), et comprenant des moyens d'imagerie (3, 6, 13) configurées pour acquérir des images d'un élément optique éclairé par ledit faisceau d'éclairage (9) dans un champ de vue des moyens d'imagerie (3, 6, 13) ; et
- une voie de mesure (VM) configurée pour produire un faisceau de mesure (11) à une position déterminée relativement audit champ de vue, et comprenant un capteur optique de distance (2) configuré pour produire des mesures de distance et/ou d'épaisseurs ;
**caractérisé en ce que** ledit procédé (100) comprend les étapes suivantes :
- positionnement (102) relatif de l'au moins un élément optique de référence et du faisceau de mesure (11), de sorte à permettre une mesure d'interfaces dudit au moins un élément optique de référence ;
- acquisition (104) d'une image, dite « de référence », de l'au moins un élément optique de référence ainsi positionné ;
- positionnement (106) de l'élément optique à mesurer (5) relativement au champ de vue de sorte à permettre l'acquisition d'une image, dite « de mesure », dudit élément optique à mesurer ;
- détermination (107) d'une différence de position dans le champ de vue de l'élément optique à mesurer (5) relativement à l'au moins un élément optique de référence à partir des images de référence et de mesure ;
- ajustement (110) de la position de l'élément optique à mesurer (5) dans le champ de vue de sorte à annuler ladite différence de position ; et
- mesure (112) des interfaces de l'élément optique à mesurer (5) au moyen du faisceau de mesure (11),
le procédé étant mis en oeuvre pour mesurer les positions et/ou l'espacement des interfaces d'un élément optique à mesurer sous la forme d'un assemblage optique avec des lentilles, tel qu'un objectif de smartphone, les interfaces comprenant les surfaces des lentilles.

2. Procédé (100) selon la revendication 1, **caractérisée en ce que** l'étape (102) de positionnement relatif de l'au moins un élément optique de référence et du faisceau de mesure (11) comprend un alignement dudit faisceau de mesure (11) de sorte à être perpendiculaire à au moins une partie des interfaces de l'au moins un élément optique de référence.

3. Procédé (100) selon la revendication 1 ou 2, **caractérisé en ce qu'**il comprend l'acquisition d'une pluralité d'images de référence en utilisant une pluralité d'éléments optiques de référence de la pluralité d'éléments optiques.

4. Procédé (100) selon l'une quelconque des revendications précédentes, **caractérisé en ce que** l'étape (107) de détermination d'une différence de positions comprend une étape de comparaison des images de référence et de mesure.

5. Procédé (100) selon la revendication précédente, **caractérisé en ce que** l'étape de comparaison comprend les étapes suivantes :
- identification (108) et localisation d'au moins une forme caractéristique correspondante, dans les images de référence et de mesure respectivement ;
- détermination (109) d'une différence de position entre lesdites formes caractéristiques correspondantes dans les images de référence et de mesure.

6. Procédé (100) selon la revendication 4 ou 5, **caractérisé en ce que** l'étape de comparaison comprend une étape de corrélation d'images.

7. Procédé (100) selon l'une quelconque des revendications précédentes, **caractérisé en ce que** l'étape d'ajustement de la position (110) comprend :
- un déplacement de l'élément optique à mesurer relativement au champ de vue ; et/ou
- un déplacement du faisceau de mesure relativement au champ de vue.

8. Procédé (100) selon l'une quelconque des revendications précédentes, **caractérisé en ce que** les étapes relatives à l'élément optique à mesurer sont réalisées pour une pluralité d'éléments optiques à mesurer issus d'un même ensemble de production.

9. Dispositif (1) de mesure d'interfaces d'un élément optique à mesurer (5), faisant partie d'une pluralité d'éléments optiques similaires comprenant au moins un élément optique de référence, le dispositif comprenant :
- une voie d'imagerie (VI) configurée pour produire un faisceau d'éclairage (9), et comprenant des moyens d'imagerie (3, 6, 13) configurés pour acquérir des images d'un élément optique éclairé par ledit faisceau d'éclairage (9) dans un champ de vue des moyens d'imagerie (3, 6, 13) ;
- une voie de mesure (VM) configurée pour produire un faisceau de mesure (11) à une position déterminée relativement audit champ de vue, et comprenant un capteur optique de distance (2) configuré pour produire des mesures de distance et/ou d'épaisseurs ; chaque voie (VI, VM) comprenant une source de lumière distincte (8, 8a, 42) ;
- un support (30) pour recevoir la pluralité d'éléments optiques ;
- des moyens de déplacement (14, 15) configurés pour déplacer l'élément optique à mesurer (5) ou le faisceau de mesure (11) relativement au champ de vue ; et
- un module de traitement (50) configuré pour traiter les mesures de distance et/ou d'épaisseur, et les images ;
agencés pour mettre en oeuvre toutes les étapes du procédé (100) selon l'une quelconque des revendications précédentes.

10. Dispositif (1) selon la revendication précédente, **caractérisé en ce que** le capteur optique (2) comprend un interféromètre à faible cohérence.

11. Dispositif (1) selon l'une quelconque des revendications 9 ou 10, **caractérisé en ce qu'**il comprend des éléments optiques (7) pour insérer le faisceau de mesure (11) dans la voie d'imagerie (VI), de sorte qu'il se propage dans le champ de vue.

12. Dispositif (1) selon l'une quelconque des revendications 9 à 11, **caractérisé en ce que** la voie de mesure (VM) est en outre configurée pour produire un deuxième faisceau de mesure incident sur une face opposée de l'élément optique à mesurer (5).

13. Dispositif (1) selon la revendication 12, **caractérisé en ce que** les moyens de déplacement (14) sont adaptés pour déplacer le support (30) dans un plan perpendiculaire à un axe optique des moyens d'imagerie (3, 6, 13).

## Patentansprüche

1. Verfahren (100) zum Messen von Grenzflächen eines zu messenden optischen Elements (5), das Teil einer Vielzahl von ähnlichen optischen Elementen, umfassend mindestens ein so genanntes optisches "Referenzelement", ist, wobei das Verfahren (100) von einer Messeinrichtung (1) durchgeführt wird, umfassend:
- einen Bildkanal (VI), der eingerichtet ist, um einen Beleuchtungsstrahl (9) zu erzeugen, und umfassend Bildgebungsmittel (3, 6, 13), die eingerichtet sind, um Bilder eines von dem Beleuchtungsstrahl (9) beleuchteten optischen Elements in einem Sichtfeld der Bildgebungsmittel (3, 6, 13) zu erfassen; und
- einen Messkanal (VM), der eingerichtet ist, um einen Messstrahl (11) an einer bestimmten Position in Bezug zum Sichtfeld zu erzeugen, und umfassend einen optischen Abstandssensor (2), der eingerichtet ist, um Abstands- und/oder Dickenmessungen durchzuführen;
**dadurch gekennzeichnet, dass** das Verfahren (100) die folgenden Schritte umfasst:
- relatives Positionieren (102) des mindestens einen optischen Referenzelements und des Messstrahls (11), um ein Messen von Grenzflächen des mindestens einen optischen Referenzelements zu ermöglichen;
- Erfassen (104) eines so genannten "Referenzbildes" des mindestens einen so positionierten optischen Referenzelements;
- Positionieren (106) des zu messenden optischen Elements (5) in Bezug zu dem Sichtfeld, um das Erfassen eines so genannten "Messbildes" des zu messenden optischen Elements zu ermöglichen;
- Bestimmen (107) eines Positionsunterschieds in dem Sichtfeld des zu messenden optischen Elements (5) in Bezug zu dem mindestens einen optischen Referenzelement auf Basis der Referenz- und Messbilder;
- Anpassen (110) der Position des zu messenden optischen Elements (5) in dem Sichtfeld, um den Positionsunterschied aufzuheben; und
- Messen (112) der Grenzflächen des zu messenden optischen Elements (5) mit Hilfe des Messstrahls (11),
wobei das Verfahren durchgeführt wird, um die Positionen und/oder den Abstand der Grenzflächen eines zu messenden optischen Elements in Form einer optischen Anordnung mit Linsen, wie einem Smartphone-Objektiv, zu messen, wobei die Grenzflächen die Oberflächen der Linsen umfassen.

2. Verfahren (100) nach Anspruch 1, **dadurch gekennzeichnet, dass** der Schritt (102) des relativen Positionierens des mindestens einen optischen Referenzelements und des Messstrahls (11) eine Ausrichtung des Messstrahls (11) umfasst, so dass er zumindest zu einem Teil der Grenzflächen des mindestens einen optischen Referenzelements senkrecht ist.

3. Verfahren (100) nach Anspruch 1 oder 2, **dadurch gekennzeichnet, dass** es das Erfassen einer Vielzahl von Referenzbildern unter Verwendung einer Vielzahl von optischen Referenzelementen aus der Vielzahl von optischen Elementen umfasst.

4. Verfahren (100) nach einem der vorhergehenden Ansprüche, **dadurch gekennzeichnet, dass** der Schritt (107) des Bestimmens eines Positionsunterschieds einen Schritt des Vergleichens der Referenz- und Messbilder umfasst.

5. Verfahren (100) nach dem vorhergehenden Anspruch, **dadurch gekennzeichnet, dass** der Vergleichsschritt die folgenden Schritte umfasst:
- Identifizieren (108) und Lokalisieren mindestens einer entsprechenden charakteristischen Form jeweils in den Referenz- bzw. Messbildern;
- Bestimmen (109) eines Positionsunterschieds zwischen den entsprechenden charakteristischen Formen in den Referenz- und Messbildern.

6. Verfahren (100) nach Anspruch 4 oder 5, **dadurch gekennzeichnet, dass** der Vergleichsschritt einen Schritt des Korrelierens von Bildern umfasst.

7. Verfahren (100) nach einem der vorhergehenden Ansprüche, **dadurch gekennzeichnet, dass** der Schritt des Anpassens der Position (110) umfasst:
- eine Verschiebung des zu messenden optischen Elements in Bezug zum Sichtfeld; und/oder
- eine Verschiebung des Messstrahls in Bezug zum Sichtfeld.

8. Verfahren (100) nach einem der vorhergehenden Ansprüche, **dadurch gekennzeichnet, dass** die Schritte im Zusammenhang mit dem zu messenden optischen Element für eine Vielzahl von zu messenden optischen Elementen, die aus einer selben Produktionsreihe stammen, durchgeführt werden.

9. Vorrichtung (1) zum Messen von Grenzflächen eines zu messenden optischen Elements (5), das Teil einer Vielzahl von ähnlichen optischen Elementen, umfassend mindestens ein optisches "Referenzelement", ist, wobei die Vorrichtung umfasst:
- einen Bildkanal (VI), der eingerichtet ist, um einen Beleuchtungsstrahl (9) zu erzeugen, und umfassend Bildgebungsmittel (3, 6, 13), die eingerichtet sind, um Bilder eines von dem Beleuchtungsstrahl (9) beleuchteten optischen Elements in einem Sichtfeld der Bildgebungsmittel (3, 6, 13) zu erfassen;
- einen Messkanal (VM), der eingerichtet ist, um einen Messstrahl (11) an einer bestimmten Position in Bezug zum Sichtfeld zu erzeugen, und umfassend einen optischen Abstandssensor (2), der eingerichtet ist, um Abstands- und/oder Dickenmessungen durchzuführen; wobei jeder Kanal (VI, VM) eine separate Lichtquelle (8, 8a, 42) umfasst;
- einen Träger (30), um die Vielzahl von optischen Elementen aufzunehmen;
- Verschiebungsmittel (14, 15), die eingerichtet sind, um das zu messende optische Element (5) oder den Messtrahl (11) in Bezug zum Sichtfeld zu verschieben; und
- ein Verarbeitungsmodul (50), das eingerichtet ist, um die Abstands- und/oder Dickenmessungen und die Bilder zu verarbeiten;
die dazu vorgesehen sind, die Schritte des Verfahrens (100) nach einem der vorhergehenden Ansprüche umzusetzen.

10. Vorrichtung (1) nach dem vorhergehenden Anspruch, **dadurch gekennzeichnet, dass** der optische Sensor (2) ein Interferometer mit geringer Kohärenz umfasst.

11. Vorrichtung (1) nach einem der Ansprüche 9 oder 10, **dadurch gekennzeichnet, dass** sie optische Elemente (7) umfasst, um den Messstrahl (11) in den Bildkanal (VI) einzuführen, so dass er sich in dem Sichtfeld ausbreitet.

12. Vorrichtung (1) nach einem der Ansprüche 9 bis 11, **dadurch gekennzeichnet, dass** der Messkanal (VM) ferner eingerichtet ist, um einen zweiten Messstrahl zu erzeugen, der auf einer entgegengesetzten Seite des zu messenden Elements (5) einfällt.

13. Vorrichtung (1) nach Anspruch 12, **dadurch gekennzeichnet, dass** die Verschiebungsmittel (14) eingerichtet sind, um den Träger (30) in einer Ebene senkrecht zu einer optischen Achse der Bildgebungsmittel (3, 6, 13) zu verschieben.

## Claims

1. Method (100) for measuring interfaces of an optical element to be measured (5), forming part of a plurality of similar optical elements comprising at least one optical element called "reference optical element", the method (100) being implemented by a measurement device (1) comprising:
- an imaging channel (VI) configured to produce an illumination beam (9), and comprising imaging means (3, 6, 13) configured to acquire images of an optical element illuminated by said illumination beam (9) in a field of view of the imaging means (3, 6, 13); and
- a measurement channel (VM) configured to produce a measurement beam (11) at a determined position with respect to said field of view, and comprising a distance optical sensor (2) configured to produce distance and/or thickness measurements;
**characterized in that** said method (100) comprises the following steps:
- relative positioning (102) of the at least one reference optical element and the measurement beam (11), so as to allow a measurement of interfaces of said at least one reference optical element;
- acquisition (104) of an image, called "reference image", of the thus-positioned at least one reference optical element;
- positioning (106) of the optical element to be measured (5) with respect to the field of view so as to allow the acquisition of an image, called "measurement image", of said optical element to be measured;
- determining (107) a difference of position in the field of view of the optical element to be measured (5) with respect to the at least one reference optical element, based on the reference and measurement images;
- adjusting (110) the position of the optical element to be measured (5) in the field of view so as to cancel said difference of position; and
- measuring (112) the interfaces of the optical element to be measured (5) by means of the measurement beam (11),
the method being implemented to measure the positions and/or the gaps between the interfaces of an optical element to be measured in the form of an optical assembly with lenses, such as a smartphone objective, the interfaces comprising the surfaces of the lenses.

2. Method (100) according to claim 1, **characterized in that** the step (102) of relative positioning of the at least one reference optical element and of the measurement beam (11) comprises an alignment of said measurement beam (11) so as to be perpendicular to at least a portion of the interfaces of the at least one reference optical element.

3. Method (100) according to claim 1 or 2, **characterized in that** it comprises the acquisition of a plurality of reference images by using a plurality of reference optical elements of the plurality of optical elements.

4. Method (100) according to any one of the preceding claims, **characterized in that** the step (107) of determining a difference of positions comprises a step of comparison of the reference and measurement images.

5. Method (100) according to the preceding claim, **characterized in that** the comparison step comprises the following steps:
- identifying (108) and locating at least one corresponding characteristic shape, respectively in the reference and measurement images;
- determining (109) a difference of position between said corresponding characteristic shapes, in the reference and measurement images.

6. Method (100) according to claim 4 or 5, **characterized in that** the comparison step comprises an image correlation step.

7. Method (100) according to any one of the preceding claims, **characterized in that** the step of adjusting the position (110) comprises:
- displacement of the optical element to be measured with respect to the field of view; and/or
- displacement of the measurement beam with respect to the field of view.

8. Method (100) according to any one of the preceding claims, **characterized in that** the steps relating to the optical element to be measured are carried out for a plurality of optical elements to be measured originating from one and the same production ensemble.

9. Device (1) for measuring interfaces of an optical element to be measured (5), forming part of a plurality of similar optical elements comprising at least one reference optical element, the device comprising:
- an imaging channel (VI) configured to produce an illumination beam (9), and comprising imaging means (3, 6, 13) configured to acquire images of an optical element illuminated by said illumination beam (9) in a field of view of the imaging means (3, 6, 13);
- -a measurement channel (VM) configured to produce a measurement beam (11) at a determined position with respect to said field of view, and comprising a distance optical sensor (2) configured to produce distance and/or thickness measurements; each channel (VI, VM) comprising a distinct light source (8, 8a, 42);
- a support (30) for receiving the plurality of optical elements;
- displacement means (14, 15) configured to displace the optical element to be measured (5) or the measurement beam (11) relatively to the field of view; and
- a processing module (50) configured to process the distance and/or thickness measurements, and the images;
arranged to implement all the steps of the method (100) according to any one of the preceding claims.

10. Device (1) according to the preceding claim, **characterized in that** the optical sensor (2) comprises a low-coherence interferometer.

11. Device (1) according to any one of claims 9 or 10, **characterized in that** it comprises optical elements (7) for inserting the measurement beam (11) into the imaging channel (VI), so that it is propagated in the field of view.

12. Device (1) according to any one of claims 9 to 11, **characterized in that** the measurement channel (VM) is further configured to produce a second measurement beam incident on an opposite face of the optical element to be measured (5).

13. Device (1) according to claim 12, **characterized in that** the displacement means (14) are suitable for displacing the support (30) in a plane perpendicular to an optical axis of the imaging means (3, 6, 13).
